(19) Europäisches Patentamt
European Patent Office
Office européen des brevets

(11) Publication number: **0 191 967 B1**

(12) # EUROPEAN PATENT SPECIFICATION

(45) Date of publication of patent specification: **04.03.92**

(51) Int. Cl.5: **C10M 133/52**, C10M 159/12, C08F 8/32, C10L 1/22, //(C10N30/06,60:14), (C10M159/12,129:08,129:93, 133:08,133:12)

(21) Application number: **85303120.1**

(22) Date of filing: **02.05.85**

(54) **Reaction products of alkenylsuccinic compounds with aromatic amines and lubricant compositions thereof.**

(30) Priority: **19.02.85 US 702989**

(43) Date of publication of application: **27.08.86 Bulletin 86/35**

(45) Publication of the grant of the patent: **04.03.92 Bulletin 92/10**

(84) Designated Contracting States: **AT BE CH DE FR GB IT LI LU NL SE**

(56) References cited:
**GB-A- 2 017 108**
**US-A- 3 576 743**
**US-A- 3 991 056**
**US-A- 4 522 736**

(73) Proprietor: **MOBIL OIL CORPORATION**
**150 East 42nd Street**
**New York New York 10017(US)**

(72) Inventor: **Andress, Harry John, Jr.**
**501 East Elm Street**
**Wenonah New Jersey 08090(US)**
Inventor: **Ashjian, Henry**
**22 Surrey Lane**
**East Brunswick New Jersey 08816(US)**

(74) Representative: **Cooper, John Anthony et al**
**Mobil Court 3 Clements Inn**
**London WC2A 2EB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The invention relates to additives useful in lubricant compositions having superior dispersant and antioxidant activity.

It is known that in the normal use of organic lubricant oils such as transmission fluids, bearing lubricants, power transmitting fluids and diesel engine lubricants, the base medium is subjected to oxidizing conditions which may result in the formation of sludge, lacquers, corrosive acids and the like. These products are undesirable since they leave oxidation residues or other solid contaminants which interfere with the normal operation of the fluid, increase its viscosity and even cause severe damage to parts of the equipment itself.

In the lubrication of modern engines, oil compositions must be able to prevent acids, sludge and other solid contaminants from maintaining contact with moving metal parts. Poor piston travel and excessive engine bearing corrosion may result unless the oil can prevent sludge and oxidation products from depositing in the engines. Superior dispersants are therefore particularly needed in new engine oils.

The most desirable way for decreasing these difficulties is to add to the base lubricant fluid an additive capable of dispersing solid particles to prevent them from interfering with the normal operation of the equipment and capable of leaving the metal surfaces relatively clean. Today with modern equipment operating under increasingly strenuous conditions, it is highly desirable to develope new detergents which have imporved dispersant properties, which are soluble in the fluid lubricants to which they are added and which are themselves stable therein.

US-A-3991056 discloses an oil-soluble ashless detergent dispersant consisting of a reaction product obtained by reacting an alkenyl dibasic acid or its anhydride with an alchool of the hindered type and then reacting the so obtained intermediate with an amine or its derivitive or analogue.

US-A-3576753 discloses an oil soluble composition produced by reacting at least one high molecular weight polycarboxylic acid acylating agent with at least one equivalent of a polyhydric alcohol to form a first reaction mixture which is then subsequently contacted with a hydroxy-substituted primary amine.

GB-A-2017109 discloses lubricating oil additives produced by reacting a substituted succinimide (For example) with an aldehyde and a compound having, inter alia, antioxidant activity.

In accordance with the invention, there is provided a product made by (a) reacting (i) an alkenylsuccinic compound with (ii) a secondary amine of the formula:

ANHB (I)

wherein A and B, which may be the same or different are each independently an aromatic group or an alkyl substituted aromatic group; and (iii) a compound selected from the group consisting of an alkanolamine of the formula:

$(HOR^1)_X N(H)_Y$ (II)

wherein $R^1$ is an alkylene group having 1 to 6 carbon atoms, x is 1 to 3 and y is 0 to 2, the sum of x and y being 3, an aminomethane of the formula:

$(HOR^2)_{X'} C(H)_{Y'} NH_2$ (III)

wherein $R^2$ is the same as $R^1$ and x' and y' have the same meaning as x and y, respectively, and a hindered alcohol selected from the gorup consisting of a pentaerythritol, trimethylolpropane, trimethyl - 1,3 - pentanediol, neopentyl glycol, trimethylolbutane and

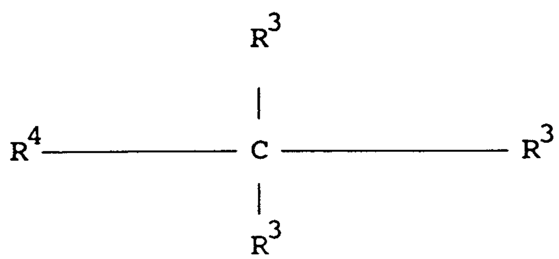

(IV)

wherein $R^3$ and $R^4$ are each selected from $CH_2OH$ and $CH_3$. The reaction products can be optionally borated. The reaction product may also be used in liquid hydrocarbon fuels.

The product according to claim 1 can be made by (a) reacting the alkenylsuccinic compound with the secondary amine and then (b) reacting the reaction product of step (a) with the compound (iii).

The alkenylsuccinic compound (i) which includes alkenylsuccinic acid, ester or anhydride thereof is one wherein the alkenyl group is a hydrocarbon containing a double bond and containing from 25 to about 300, preferably 30 to 150 carbon atoms. The alkenyl group can have a number average molecular weight of from about 360 to about 1800. An oligomer may be produced by known techniques from an olefin or polyolefin and maleic anhydride such as the catalytic oligomerization of an olefin containing 2 to about 10 carbon atoms and the oligomer so produced can then be reacted with maleic anhydride by well known methods (as by $BF_3$ catalysis) to give the alkenylsuccinic compound. The olefin may be a simple alkene, such as 1-octene, 1-decene, 1-dodecene, and so forth, or it may be a polymer or copolymer of such olefines as ethene, propene, 1-butene, isobutene, 1-hexene, 1-octene and so forth.

The alkenylsuccinic esters include the mono and diesters and may be represented by the formula:

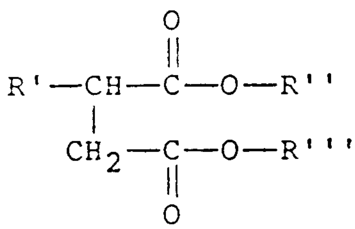

(V)

wherein R' is the alkenyl group defined herein above and R'' and R''' are hydrogen or a hydrocarbyl group having from 1 to 22 carbon atoms. Preferably the group is an alkyl having 1 to 18 carbon atoms. For example, R'' and R''' may be methyl, ethyl, butyl, octyl, dodecyl, octadecyl, eicosyl, and the like. They may also be hydrogen. While both R'' and R''' may be a hydrocarbyl group, either the same or different, only one of them may be hydrogen. In other words, at least one of R'' and R''' must be a hydrocarbyl group.

Preferred secondary aromatic amines of the above formula A-NH-B (I) include secondary aromatic amines of the formulas:

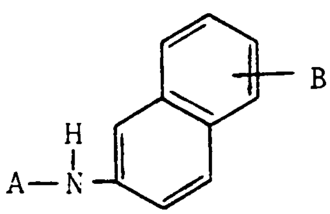

(I')

or

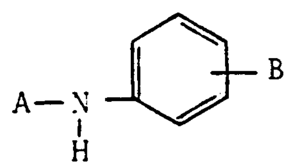

(I'')

wherein A and B are each an aromatic or aryl group which may be the same or different, and which may contain an aliphatic substituent, preferably an alkyl substituent having 1 to 44, preferably about 4 to 18 carbon atoms; each aryl group (A and B) separately may be a benzene or naphthalene nucleus, containing substituents in addition to the alkyl groups. A and/or B may, for example, be a naphthalene residue such as an alpha or beta naphtyl group. The aromatic or aryl groups generally will have from 6 to about 50 carbon atoms, preferably 6 to 14 carbon atoms. In addition to being alkyl, substituent groups may also be an aralkyl, alkoxy or acyloxy group. However, preferably the substituent will be selected from among tertiary octyl, t-dodecyl, di-t-dodecyl, t-butyl and di-t-butyl.

Examples of aromatic amines include mono-tertiaryalkyl-diarylamines, di-tertiaryoctyl-diphenylamine, dialkyl-diarylamines, diphenylamine, 4-tertiarypentyl-diphenylamine, N-p-tertiary pentyl-phenyl-alpha-naphthylamine, beta-4-tertiary-octyl-phenyl-alpha naphthylamine, N-p-(1:1:3:3:-tetramethylbutyl) alpha-naphthylamine, 4-p-(1:1:3:3:-tetramethylbutyl) diphenylamine, phenyl-alpha-naphthylamine and phenyl-beta-naphthylamine.

Preferred aromatic amines include diphenylamine and phenyl-alpha-naphthylamine and their alkylated derivatives.

The preferred alkanolamine is triethanolamine.

The preferred aminomethane is tris(hydroxymethyl)-amino-methane.

The reactants, i.e., the succinic compound, the aromatic amine and the hindered alcohol can be made by any method known to the art or obtained from suitable commercial sources.

The reactions by which the products in accordance with the invention are obtained can, broadly, be carried out over a wide range of conditions of from 50°C to 300°C in from 0.5 hour to 10 hours, depending on temperature and reactivity of the reactants, and at atmospheric or elevated pressures. The temperature of reaction can be from 50°C to 250°C and preferably is from 100°C to 200°C for the reaction between the alkenylsuccinic compound and the arylamine. When carrying out the reaction of the alkenylsuccinic-diarylamine product with the aminomethane or alkanolamine, the temperature will generally be from 100°C to 300°C, preferably 150°C to 275°C. Times will run from 1 hour or less to 10 hours. When carrying out the reaction of the alkenylsuccinic-arylamine product and the hindered alcohol, the temperature will generally be from 100°C to 300°C, preferably 125°C to 275°C and reaction times will run from 1 hour or less to 10 hours.

The reactants can be used in the range of 0.1 to 1.0 mole of arylamine per 1.0 mole of alkenylsuccinic compound and from 0.1 to 1.2 moles of alkanolamine or aminomethane or 0.5 to 1 mole of hindered alcohol per 1.0 mole of alkenylsuccinic compound. The preferred amounts of reactants are 1.0 mole of alkenylsuccinic compound, 1.0 mole of arylamine and no more than about 0.6 mole of alkanolamine or aminomethane and about 0.75 mole of hindered alcohol.

The alkenyl group of the alkenylsuccinic compound, preferably the anhydride or the acid, substituted or unsubstituted, can have a number average molecular weight of from 360 to 1800, i.e., it will preferably have from 30 to 150 carbon atoms.

The reaction is preferably carried out by first reacting the alkenylsuccinic compound and the aromatic amine followed by reacting the product thereof with the alkanolamine, aminomethane or hindered alcohol. However, any convenient method known to the art may be used.

While the reaction sequence has been disclosed to be reaction of (1) alkenylsuccinic compound and diarylamine and (2) reaction of (1) with an alkanolamine, the invention is not limited to that method. For example, the alkanolamine may be reacted with the alkenylsuccinic compound, followed by reaction of the product thus obtained with the diarylamine. The same times and temperatures mentioned above for reactions involving diarylamine or alkanolamine will generally apply in such reactions. Furthermore, all reactants can be mixed and reacted in one step, in which case the temperature again can be from 50°C to 300°C and the time from 0.5 hour to 10 hours.

The unborated reaction products of the present invention can be borated by reaction with a boron compound such a boric acid, boric oxide, an alkyl borate or mixtures of these. Boric acid is preferably reacted with an excess of an alcohol to form an alkyl borate which reacts with the unborated reaction product to form a borated reaction product. Alcohols such as lower alkanols, e.g., methanol, ethanol, propanol, butanol, pentanol, etc., are especially useful. Approximately one mole of unborated reaction product is reacted with between 1/5 to 1 mole of boron compound, preferably about 1/3 mole of boron compound.

The reaction to form the borated product can be carried out at from 80°C to 260°C, preferably from 110°C to 120°C. The temperature chosen will depend for the most part on the particular reactants and on whether or not a solvent is used. Reaction pressures can be vacuum, atmospheric or positive pressure.

The products of the invention are used in minor dispersant or anticorrosion amounts with a major proportion of a lubricating oil or grease or other solid lubricant or fuel. In general, this will amount to from 0.05% to 15% by weight of the total composition. Furthermore, other additives, such as other detergents, antioxidants, antiwear agents and the like may be compatibly used therein for their known purposes. These additives can include phenates, sulfonates, succinimides, zinc dithiophosphates, polymers, calcium and magnesium salts and the like.

The lubricants contemplated for use with the products herein disclosed include mineral and synthetic oils of lubricating viscosity, mixtures of mineral oils, mixtures of synthetic oils and mixtures of mineral and synthetic oils. The synthetic hydrocarbon oils include long-chain alkanes such as cetanes and olefin polymers such as oligomers of hexene, octene, decene, and dodecene, etc. The products of this invention are especially effective in synthetic oils formulated using mixtures of synthetic hydrocarbon olefin oligomers and lesser amounts of hydrocarbyl carboxylic ester fluids. Other synthetic oils, which can be mixed with a mineral or synthetic hydrocarbon oil, include (1) fully esterified ester oils, with no free hydroxyls, such as pentaerythritol esters of monocarboxylic acids having 2 to about 20 carbon atoms, trimethylolpropane esters of monocarboxylic acids having 2 to about 20 carbon atoms, (2) polyacetals and (3) siloxane fluids. Especially useful among the synthetic esters are those made from polycarboxylic acids and monohydric alcohols. More preferred are the ester fluids made by fully esterifying pentaerythritol, di- and tripentaerythritol or mixtures thereof with an aliphatic monocarboxylic acid containing from 1 to about 20 carbon atoms,

or mixtures of such acids.

As hereinbefore indicated, the aforementioned additives can be incorporated into grease compositions. When high temperature stability is not a requirement of the finished grease, mineral oils having a viscosity of at least 40 SSU (about 4 $cm^2/s$) at 150°F (66°C) are useful. Otherwise those falling within the range of from 60 SSU about 10 $mm^2/s$) to 6,000 SSU (about 1000 $mm^2/s$) at 100°F (38°C) may be employed. The lubricating compositions of the present invention, containing the above-described additives, are combined with a grease-forming quantity of a thickening agent. For this purpose, a wide variety of materials can be dispersed in the lubricating oil in such degree as to impart to the resulting grease composition the desired consistency. For example, soap thickeners, e.g., calcium and lithium soaps may be used. Non-soap thickeners, such as surface-modified clays and silicas, aryl ureas, calcium complexes and similar materials may also be used. In general, grease thickeners are employed which do not melt or dissolve when used at the required temperature within a particular environment, however, in all other respects, any material which is normally employed in thickening or gelling oleaginous fluids or forming greases may be used in the present invention.

These additives as mentioned hereinabove are also contemplated for use in liquid hydrocarbyl fuels such as various distillates, diesel fuel and gasoline.

Having described the invention with reference to its broader aspects, the following are offered to specifically illustrate it. It will be understood that the Examples are for illustration only and are not intended to limit the scope of the invention.

EXAMPLE 1

A mixture of 676 grams (0.48 mol) of polybutenylsuccinic anhydride and 105 grams (0.48 mol) of phenyl-alpha-naphthylamine was stirred at 160°C for about three hours. The reaction mixture was then cooled to about 100°C and 50 grams (0.34 mol) of triethanolamine were added. The mixture was then stirred to about 265°C over a six hour period using a stream of nitrogen to remove water formed during the reaction. The final product was obtained by filtration.

EXAMPLE 2

A mixture of 1800 grams (1.0 mol) of polybutenylsuccinic anhydride and 169 grams (1.0 mol) of diphenylamine was stirred for three hours at 160°C, then allowed to cool to 75°C. At this point, 121 grams (1 mol) of tris(hydroxymethyl)-aminomethane were added and the mixture stirred to 250°C over a six hour period. After blowing with nitrogen, the final product was obtained by filtration.

EXAMPLE 3

A mixture of 1800 grams (1.0 mol) of polybutenylsuccinic anhydride and 169 grams (1.0 mol) of diphenylamine was stirred for three hours at 160°C. After cooling to 100°C, 112 grams (0.75 mol) of triethanolamine were added and the mixture stirred to 225°C over a six hour period. After blowing with nitrogen, the final product was obtained by filtration.

EXAMPLE 4

A commercial dispersant.

EXAMPLE 5

A mixture of 1800 grams (1.0 mol) polybutenylsuccinic anhydride and 169 g (1.0 mol) diphenylamine was stirred at about 170°C for three hours. After cooling to about 120°C, 105 g (0.7 mol) of commercial pentaerythritol (a mixture of mono- and dipentaerythritol) were added to the mixture and stirred at about 250°C over a six hour period. The final product was obtained by blowing with nitrogen and filtering.

EXAMPLE 6

A mixture of 1800 grams (1.0 mol) polybutenylsuccinic anhydride and 169 g (1.0 mol) diphenylamine was stirred at about 170°C for three hours. After cooling to 125°C, 100.5 g (0.75 mol) trimethylolpropane were added and the mixture stirred to 250°C over a six hour period. The final product was obtained by

blowing with nitrogen and filtering.

EXAMPLE 7

A polybutenylsuccinimide commercial dispersant.

EXAMPLE 8

A commercial dispersant derived from polybutenylsuccinic anhydride, pentaerythritol, and a polyethylene polyamine.

EXAMPLE 9

A mixture of 300 grams of the reaction product of Example 2, 25 grams of boric acid and 35 grams of n-butanol was heated at 100°C for 2 hours. The reaction mixture was subjected to a vacuum to remove water. The final product was obtained by filtration.

EXAMPLE 10

A mixture of 300 grams of the reaction product of Example 3, 25 grams of boric acid and 35 grams of n-butanol was heated at 100°C for 2 hours. The reaction mixture was subjected to a vacuum to remove water. The final product was obtained by filtration.

EXAMPLE 11

A mixture of 300 grams of the reaction product of Example 5, 25 grams of boric acid and 35 grams of n-butanol was heated at 100°C for 2 hours. The reaction mixture was subjected to a vacuum to remove water. The final product was obtained by filtration.

EXAMPLE 12

A mixture of 300 grams of the reaction product of Example 6, 25 grams of boric acid and 35 grams of n-butanol was heated at 100°C for 2 hours. The reaction mixture was subjected to a vacuum to remove water. The final product was obtained by filtration.

EVALUATION OF PRODUCTS

The products of this invention were tested in lubricating oils in the 1-G Caterpillar engine test, the conditions of which were as follows:

An oil composition consisting of a blend of solvent refined mineral oils (KV at 210°F (98.9°C) of 11 cs) was used as the base fluid. To this was added 4.2% by weight (pure basis) of the additives of Examples 1 through 8.

The test engine was a single cylinder 4-cycle Caterpillar engine operated under the following conditions:

| | |
|---|---|
| Speed, RPM | 1000 |
| Brake Load, HP | 19.8 |
| Oil Temperature, °F | 150 (65.6°C) |
| Jacket Temperature, °F | 150 (65.6°C) |
| Fuel | Diesel fuel containing 1 percent sulfur |

The engine is operated for 480 hours, ratings being made after 240 hours and 480 hours. These ratings are made in accordance with the Coordinating Research Council rating system for diesel pistons. With this system O is clean and the maximum piston density allowed is 17,450.

All percentages were by weight. The following results were obtained:

TABLE

| Caterpillar 1-6 Test* | | | |
|---|---|---|---|
| Example No. | Conc. Wt. % | Top Groove Packing | Weighted Total Demerits |
| 1 | 4.2 | 3.0 | 130.1 |
| 2 | 4.2 | 12.0 | 120.0 |
| 3 | 4.2 | 2.0 | 58.0 |
| 4 (a commercial dispersant) | 4.2 | 75.0 | 152.0 |
| 5 | 4.2 | 9.0 | 211.0 |
| 6 | 4.2 | 35.0 | 270.0 |
| 7 | 4.2 | 120.0 | 360.0 |
| 8 | 4.2 | 35.0 | 250.0 |

* The test procedure is additionally described in U.S. Patent No. 4,292,186. The base oil composition comprises a blend of solvent refined mineral oils containing overbased calcium sulfonate, overbased calcium phenate, normal calcium sulfonate, zinc dithiophosphate and a hindered phenol antioxidant. The test results clearly show the excellent dispersant properties of additive products prepared in accordance with the invention.

**Claims**

**Claims for the following Contracting States: BE, CH, DE, FR, GB, IT, LI, LU, NL, SE**

**1.** A product of reaction made by (a) reacting (i) an alkenylsuccinic compound with (ii) a secondary amine of the formula:

ANHB (I)

wherein A and B, which may be the same or different, are each independently an aromatic group or an alkyl substituted aromatic group; and (iii) a compound selected from the group consisting of an alkanolamine of the formula:

$(HOR^1)_X N(H)_Y$ (II)

wherein $R^1$ is an alkylene group having 1 to 6 carbon atoms, x is 1 to 3 and y is 0 to 2, the sum of x and y being 3, an aminomethane of the formula:

$(HOR^2)_{X'} C(H)_{Y'} NH_2$ (III)

wherein $R^2$ is the same as $R^1$ and x' and y' have the same meaning as x and y, respectively, and a hindered alcohol selected from the group consisting of a pentaerythritol, trimethylolpropane, trimethyl-1, 3-pentanediol, neopentyl glycol, trimethylolbutane and

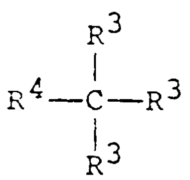

(IV)

wherein $R^3$ and $R^4$ one each selected from $CH_2OH$ and $CH_3$.

**2.** The product of claim 1, which is made by (a) reacting said alkenylsuccinic compound with said secondary amine and then (b) reacting the reaction product of step (a) with said compound (iii).

**3.** The product of claim 1, wherein the compound (iii) is pentaerythritol.

**4.** The product of claim 1, wherein the compound (iii) is dipentaerythritol.

**5.** The product of claim 1, wherein the compound (iii) is trimethylolpropane.

**6.** The product of claim 1, wherein the compound (iii) is trimethyl-1, 3-pentanediol.

**7.** The product of claim 1, wherein the compound (iii) is neopentyl glycol.

**8.** The product of claim 2, wherein reaction (a) is carried out at temperatures from 100-200°C and reaction (b) is carried out at temperatures of from 100 to 300°C with the reactants being present in a molar ratio of alkenylsuccinic compound to secondary amine to alkanolamine or aminomethane of 1:0.1 to 1.0:0.1 to 1.2 or alkenylsuccinic compound to secondary amine to hindered alcohol of 1:0.1 to 1.0:0.5 to 1.

**9.** The product of claim 1, wherein the alkanolamine is triethanolamine.

**10.** The product of claim 1, wherein the succinic compound is polybutenylsuccinic anhydride.

**11.** A borated reaction product of claim 1.

**12.** A lubricant composition comprising an oil of lubricating viscosity or grease prepared therefrom or a liquid hydrocarbon fuel and an effective dispersant or antioxidant amount from 0.05 to 15% by weight of the total composition of the product of any one of claims 1 to 12.

**13.** The composition of claim 12, wherein the lubricant is a lubricating oil.

**14.** The composition of claim 12, wherein the lubricant is a grease.

**15.** A process for making a lubricant additive comprising reacting the alkenylsuccinic compound (i), the secondary amine (ii) and the compound (iii) of claim 1 using the reaction sequence specified in claim 2 under the process conditions specified in claim 8.

**Claims for the following Contracting State: AT**

**1.** A method of making a lubricant additive comprising reacting (i) an alkenylsuccinic compound with (ii) a secondary amine of the formula:

ANHB (I)

wherein A and B, which may be the same or different, are each independently an aromatic group or an alkyl substituted aromatic group; and (iii) a compound selected from the group consisting of an alkanolamine of the formula:

$(HOR^1)_xN(H)_Y$ (II)

wherein $R^1$ is an alkylene group having 1 to 6 carbon atoms, x is 1 to 3 and y is 0 to 2, the sum of x and y being 3, an aminomethane of the formula:

$(HOR^2)_{X'}C(H)_{Y'}NH_2$ (III)

wherein $R^2$ is the same as $R^1$ and x' and y' have the same meaning as x and y, respectively, and a hindered alcohol selected from the group consisting of a pentaerythritol, trimethylolpropane, trimethyl-1, 3-pentanediol, neopentyl glycol, trimethylolbutane and

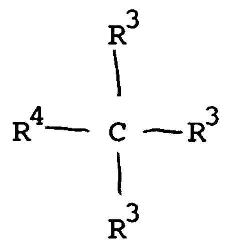

(IV)

wherein $R^3$ and $R^4$ one each selected from $CH_2OH$ and $CH_3$.

**2.** A method according to claim 1, wherein the product is made by (a) reacting said alkenylsuccinic compound with said secondary amine and then (b) reacting the reaction product of step (a) with said compound (iii).

**3.** A method according to claim 1, wherein the compound (iii) is pentaerythritol.

**4.** A method according to claim 1, wherein compound (iii) is dipentaerythritol.

**5.** A method according to claim 1, wherein the compound (iii) is trimethylolpropane.

**6.** A method according to claim 1, wherein the compound (iii) is trimethyl-1, 3-pentanediol.

**7.** A method according to claim 1, wherein the compound (iii) is neopentyl glycol.

**8.** A method according to claim 2, wherein reaction (a) is carried out at temperatures from 100-200°C and reaction (b) is carried out at temperatures of from 100 to 300°C with the reactants being present in a molar ratio of alkenylsuccinic compound to secondary amine to alkanolamine or aminomethane of 1:0.1 to 1.0:0.1 to 1.2 or alkenylsuccinic compound to secondary amine to hindered alcohol of 1:0.1 to 1.0:0.5 to 1.

**9.** A method according to claim 1, wherein the alkanolamine is triethanolamine.

**10.** A method according to claim 1, wherein the succinic compound is polybutenylsuccinic anhydride.

**11.** A method according to claim 1 comprising borating the lubricant additive with a boron compound.

**12.** A method of forming a lubricant composition comprising combining an oil of lubricating viscosity or grease prepared therefrom or a liquid hydrocarbon fuel and an effective dispersant or antioxidant amount from 0.05 to 15% by weight of the total composition of the product of any one of claims 1 to

**13.** A method according to claim 12, wherein the lubricant is a lubricating oil.

**14.** A method according to claim 12, wherein the lubricant is a grease.

**Revendications**
**Revendications pour les Etats contractants suivants: BE, CH, DE, FR, GB, IT, LI, LU, NL, SE**

**1.** Un produit obtenu (a) par réaction (i) d'un composé alkénylsuccinique avec (ii) une amine secondaire de formule:

ANHB (I)

dans laquelle:

A et B, qui peuvent être identiques ou différents, sont, chacun indépendamment de l'autre, un groupe aromatique ou un groupe aromatique à substitution alkyle;

et (iii) un composé choisi dans le groupe comprenant les alkanolamines de formule:

$(HOR^1)_X N(H)_Y$ (II)

dans laquelle:

$R^1$ est un groupe alkylène ayant 1 à 6 atomes de carbone,

x vaut 1 à 3; et

y vaut 0 à 2,

la somme de x et y étant égale à 3,

les aminométhanes de formule:

$(HOR^2)_{X'} C(H)_{Y'} NH_2$ (III)

dans laquelle:

$R^2$ est identique à $R^1$, et

x' et y' ont les mêmes significations que respectivement x et y,

et les alcools à empêchement stérique choisis dans le groupe comprenant le pentaérythritol, le triméthylolpropane, le triméthyl-1,3- pentanediol, le néopentyl-glycol, le triméthylolbutane et

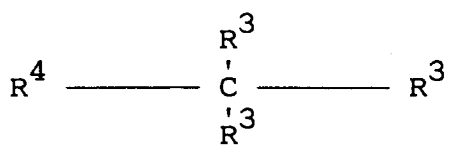

(IV)

où $R^3$ et $R^4$ sont chacun choisis parmi $CH_2OH$ et $CH_3$.

**2.** Le produit selon la revendication 1, obtenu (a) par réaction dudit composé alkénylsuccinique avec ladite amine secondaire, puis (b) par réaction du produit de la réaction de l'étape (a) avec ledit composé (iii).

**3.** Le produit selon la revendication 1, dans lequel le composé (iii) est le pentaérythritol.

**4.** Le produit selon la revendication 1, dans lequel le composé (iii) est le dipentaérythritol.

**5.** Le produit selon la revendication 1, dans lequel le composé (iii) est le triméthylolpropane.

**6.** Le produit selon la revendication 1, dans lequel le composé (iii) est le triméthyl-1, 3-pentanediol.

**7.** Le produit selon la revendication 1, dans lequel le composé (iii) est le néopentylglycol.

**8.** Le produit selon la revendication 2, dans lequel la réaction (a) est mise en oeuvre à des températures de 100 à 200 °C et la réaction (b) est mise en oeuvre à des températures de 100 à 300 °C, les réactifs étant présents selon une proportion molaire composée alkénylsuccinique/amine secondaire/alkanolamine ou aminométhane de 1/0,1 à 1,0/0,1 à 1,2, ou selon une proportion molaire composés alkénylsuccinique/amine secondaire/alcool à empêchement stérique de 1/0,1 à 1,5/0,5 à 1.

**9.** Le produit selon la revendication 1, dans lequel l'alkanolamine est la triéthanolamine.

**10.** Le produit selon la revendication 1, dans lequel le composé succinite est l'anhydride polybuténylsuccinique.

**11.** Un produit de réaction boraté du produit de la revendication 1.

**12.** Une composition lubrifiante comprenant une huile ayant une viscosité lubrifiante ou une graisse préparée à partir d'elle, ou encore un combustible hydrocarboné liquide et une quantité efficace d'un dispersant ou d'un antioxydant, de 0,05 à 15% en poids par rapport à la composition totale du produit selon l'une quelconque des revendications 1 à 12.

**13.** La composition selon la revendication 12, dans laquelle le lubrifiant est une huile lubrifiante.

**14.** La composition selon la revendication 12, dans laquelle le lubrifiant est une graisse.

**15.** Un procédé de préparation d'un additif pour lubrifiant, qui consiste à faire réagir le composé alkénylsuccinique (i), l'amine secondaire (ii) et le composé (iii) selon la revendication 1, en utilisant la séquence de réaction spécifiée dans la revendication 2 dans les conditions de procédé spécifiées dans la revendication 8.

**Revendications pour l'Etat contractant suivant: AT**

**1.** Un procédé de préparation d'un additif pour lubrifiant, qui consiste à faire réagir (i) d'un composé alkénylsuccinique avec (ii) une amine secondaire de formule:

ANHB (I)

dans laquelle:

A et a, qui peuvent être identiques ou différents, sont, chacun indépendamment de l'autre, un groupe aromatique ou un groupe aromatique à substitution alkyle;

et (iii) un composé choisi dans le groupe comprenant les alkanolamines de formule:

$(HOR^1)_XN(H)_Y$ (II)

dans laquelle:

$R^1$ est un groupe alkylène ayant 1 à 6 atomes de carbone,
x vaut 1 à 3; et
y vaut 0 à 2,
la somme de x et y étant égale à 3,

les aminométhanes de formule:

$(HOR^2)_{X'}C(H)_{Y'}NH_2$ III)

dans laquelle:

$R^2$ est identique à $R^1$, et
x' et y' ont les mêmes significations que respectivement x et y,

et les alcools à empêchement stérique choisis dans le groupe comprenant le pentaérythritol, le triméthylolpropane, le triméthyl-1,3- pentanediol, le néopentyl-glycol, le triméthylolbutane et

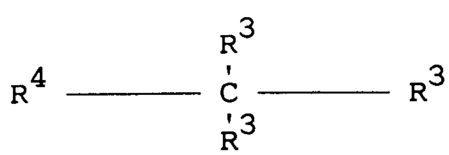

(IV)

où $R^3$ et $R^4$ sont chacun choisis parmi $CH_2OH$ et $CH_3$.

**2.** Un procédé selon la revendication 1, obtenu (a) par réaction dudit composé alkénylsuccinique avec ladite amine secondaire, puis (b) par réaction du produit de la réaction de l'étape (a) avec ledit composé (iii).

**3.** Un procédé selon la revendication 1, dans lequel le composé (iii) est le pentaérythritol.

**4.** Un procédé selon la revendication 1, dans lequel le composé (iii) est le dipentaérythritol.

**5.** Un procédé selon la revendication 1, dans lequel le composé (iii) est le triméthylolpropane.

**6.** Un procédé selon la revendication 1, dans lequel le composé (iii) est le triméthyl-1, 3-pentanediol.

**7.** Un procédé selon la revendication 1, dans lequel le composé (iii) est le néopentylglycol.

8. Un procédé selon la revendication 2, dans lequel la réaction (a) est mise en oeuvre à des températures de 100 à 200 ° C et la réaction (b) est mise en oeuvre à des températures de 100 à 300 ° C, les réactifs étant présents selon une proportion molaire composés alkénylsuccinique/amine secondaire/alkanolamine ou aminométhane de 1/0,1 à 1,0/0,1 à 1,2, ou selon une proportion molaire composée alkénylsuccinique/amine secondaire/alcool à empêchement stérique de 1/0,1 à 1,5/0,5 à 1.

9. Un procédé selon la revendication 1, dans lequel l'alkanolamine est la triéthanolamine.

10. Un procédé selon la revendication 1, dans lequel le composé succinite est l'anhydride polybuténylsuccinique.

11. Un procédé selon la revendication 1, qui consiste à borater l'additif pour lubrifiant à l'aide d'un composé du bore.

12. Un procédé de formation d'une composition lubrifiante consistant à combiner une huile ayant une viscosité lubrifiante ou une graisse préparée à partir d'elle, ou encore une combustible hydrocarboné liquide et une quantité efficace d'un dispersant ou d'un antioxydant, de 0,05 à 15% en poids par rapport à la composition totale du produit selon l'une quelconque des revendications 1 à 12.

13. Un procédé selon la revendication 12, dans laquelle le lubrifiant est une huile lubrifiante.

14. Un procédé selon la revendication 12, dans laquelle le lubrifiant est une graisse.

**Patentansprüche**
**Patentansprüche für folgende Vertragsstaaten: BE, CH, DE, FR, GB, IT, LI, LU, NL, SE**

1. Reaktionsprodukt, hergestellt durch (a) Reaktion von (i) einer Alkenylsuccin-Verbindung mit (ii) einem sekudären Amin der Formel:

ANHB (I)

worin A und B, die gleich oder verschieden sein können, jeweils unabhängig voneinander eine aromatische Gruppe oder eine mit Alkyl substituierte aromatische Gruppe sind; und (iii) einer Verbindung, die aus der Gruppe ausgewählt wurde, die aus einem Alkanolamin der Formel:

$(HOR^1)_xN(H)_y$ (II)

worin $R^1$ eine Alkylengruppe mit 1 bis 6 Kohlenstoffatomen ist, x 1 bis 3 und y 0 bis 2 sind, wobei die Summe von x und y 3 ist, einem Aminomethan der Formel:

$(HOR^2)_{x'}C(H)_{y'}NH_2$ (III),

worin $R^2$ gleich $R^1$ ist und x'und y' die gleiche Bedeutung wie x bzw. y haben, und einem gehinderten Alkohol besteht, der aus der Gruppe ausgewählt ist, die aus Pentaerythritol, Trimethylolpropan, Trimethyl-1,3-petandiol, Neopentylglycol, Trimethylolbutan und

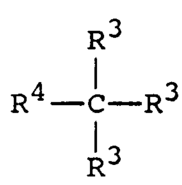

(IV)

besteht, worin bei $R^3$ und $R^4$ jeweils eins aus $CH_2OH$ und $CH_3$ ausgewählt ist.

2. Produkt nach Anspruch 1, das durch (a) Reaktion der Alkenylsuccinverbindung mit dem sekundären Amin und (b) anschließende Reaktion dieses Reaktionsproduktes des Schrittes (a) mit der Verbindung

(iii) hergestellt wurde.

**3.** Produkt nach Anspruch 1, worin die Verbindung (iii) Pentaerythritol ist.

**4.** Produkt nach Anspruch 1, worin die Verbindung (iii) Dipentaerythritol ist.

**5.** Produkt nach Anspruch 1, worin die Verbindung (iii) Trimethylolpropan ist.

**6.** Produkt nach Anspruch 1, worin die Verbindung (iii) Trimethyl-1,3-pentandiol ist.

**7.** Produkt nach Anspruch 1, worin die Verbindung (iii) Neopentylglycol ist.

**8.** Produkt nach Anspruch 2, worin die Reaktion (a) bei Temperaturen von 100-200 °C durchgeführt wird und die Reaktion (b) bei Temperaturen von 100-300 °C durchgeführt wird, wobei die Rekatanten in einem Molverhältnis der Alkenylsuccinverbindung zum sekundären Amin zum Alkanylamin oder Aminomethan von 1:0,1 bis 1,0:0,1 bis 1,2 oder der Alkenylsuccinverbindung zum sekundären Amin zum gehinderten Alkohol von 1:0,1 bis 1,0:0,5 bis 1 durchgeführt wird.

**9.** Produkt nach Anspruch 1, worin das Alkanolamin Triethanolamin ist.

**10.** Produkt nach Anspruch 1, worin die Succinverbindung Polybutenylsuccinanhydrid ist.

**11.** Boriertes Rekationsprodukt nach Anspruch 1.

**12.** Schmiermittelzusammensetzung, die ein Öl mit Schmiermittelviskosität oder ein daraus hegestelltes Fett oder einen flüssigen Kohlenwasserstoffbrennstoff und ein wirksames Dispersionsmittel oder Antioxydationsmittel in einer Menge von 0,05 bis 15 Gew.-% der gesamten Zusammensetzung des Produktes nach einem der Ansprüche 1 bis 12 umfaßt.

**13.** Zusammensetzung nach Anspruch 12, worin das Schmiermittel ein Schmieröl ist.

**14.** Zusammensetzung nach Anspruch 12, worin das Schmiermittel ein Fett ist.

**15.** Verfahren zur Herstellung eines Schmiermitteladditivs, das die Reaktion der Alkenylsuccinverbindung (i), des sekündären Amins (ii) und der Verbindung (iii) nach Anspruch 1 umfaßt, wobei die Reaktionsfolge, die im Anspruch 2 genannt ist, unter den Verfahrensbedingungen angewendet wird, die im Anspruch 8 beschrieben sind.

**Patentansprüche für folgenden Vertragsstaat: AT**

**1.** Verfahren zur Herstellung eines Schmiermitteladditivs, das die Reaktion (i) einer Alkenylsuccinverbindung mit (ii) einem sekundären Amin der Formel:

ANHB (I)

worin A und B, die gleich oder verschieden sein können, jeweils unabhängig voneinander eine aromatische Gruppe oder eine mit Alkyl substituierte aromatische Gruppe sein können, und (iii) einer Verbindung umfaßt, die aus der Gruppe ausgewählt ist, die aus einem Alkanolamin der Formel:

$(HOR^1)_xN(H)_y$ (II)

worin $R^1$ eine Alkylengruppe mit 1 bis 6 Kohlenstoffatomen ist, x 1 bis 3 und y 0 bis 2 sind, wobei die Summe von x und y 3 ist, einem Aminomethan der Formel:

$(HOR^2)_{x'}C(H)_{y'}NH_2$ (III)

worin $R^2$ gleich $R^1$ ist und x'und y'die gleiche Bedeutung wie x bzw. y haben, und einem gehinderten Alkohol besteht, der aus der Gruppe ausgewählt ist, die aus Pentaerythritol, Trimethylolbutan,

Trimethyl-1,3-pentandiol, Neopentylglycol, Trimethylolbutan und

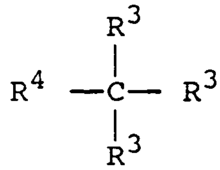

(IV)

besteht, worin jeweils eines der $R^3$ aus $CH_2OH$ und $CH_3$ ausgewählt ist.

**2.** Verfahren nach Anspruch 1, worin das Produkt durch (a) Rekation der Alkenylsuccinverbindung mit dem sekundären Amin und (b) anschließende Reaktion des Reaktionsproduktes aus dem Schritt (a) mit der Verbindung (iii) hergestellt wird.

**3.** Verfahren nach Anspruch 3, worin die Verbindung (iii) Pentaerythritol ist.

**4.** Verfahren nach Anspruch 1, worin die Verbindung (iii) Dipentaerythritol ist.

**5.** Verfahren nach Anspruch 1, worin die Verbindung (iii) Trimethylolpropan ist.

**6.** Verfahren nach Anspruch 1, worin die Verbindung (iii) Trimethyl-1,3-pentandiol ist.

**7.** Verfahren nach Anspruch 1, worin die Verbindung (iii) Neopentylglykol ist.

**8.** Verfahren nach Anspruch 2, worin die Reaktion (a) bei Temperaturen von 100-200 °C durchgeführt wird und die Reaktion (b) bei Temperaturen von 100-300 °C durchgeführt wird, wobei die Reaktanten in einem Molverhältnis der Alkenylsuccinverbindung zum sekundären Amin zum Alkanolamin oder Aminomethan von 1:0,1 bis 1,0:0,1 bis 1,2 oder der Alkenylsuccinverbindung zum sekundären Amin zum gehinderten Alkohol von 1:0,1 bis 1,0:0,5 bis 1 vorhanden sind.

**9.** Verfahren nach Anspruch 1, wobei das Alkanolamin Triethanolamin ist.

**10.** Verfahren nach anspruch 1, worin die Succinverbindung Polybutenylsuccinanhydrid ist.

**11.** Verfahren nach Anspruch 1, daß das Borieren des Schmiermitteladditivs mit einer Borverbindung umfaßt.

**12.** Verfahren zur Bildung einer Schmiermittelzusammensetzung, das die Kombination eines Öls mit Schmiermittelviskosität oder eines daraus hergestellten Fettes oder eines flüssigen Kohlenwasserstoffbrennstoffs und einer wirksamen Menge eines Dispersions- oder Antioxydationsmittels von 0,05 bis 15 Gew.-% der Gesamtzusammensetzung des Produktes nach einem der Ansprüche 1 bis 11 umfaßt.

**13.** Verfahren nach Anspruch 12, worin das Schmiermittel ein Schmieröl ist.

**14.** Verfahren nach Anspruch 12, worin das Schmiermittel Fett ist.